(19) Europäisches Patentamt
European Patent Office
Office européen des brevets

(11) Veröffentlichungsnummer: **0 277 632 B1**

# (12) EUROPÄISCHE PATENTSCHRIFT

(45) Veröffentlichungstag der Patentschrift: **08.01.92**

(51) Int. Cl.⁵: **B01J 31/16**, B01J 31/26, C02F 1/72

(21) Anmeldenummer: **88101454.2**

(22) Anmeldetag: **02.02.88**

Die Akte enthält technische Angaben, die nach dem Eingang der Anmeldung eingereicht wurden und die nicht in dieser Patentschrift enthalten sind.

## (54) Verfahren zum katalytischen Abbau von oxidierbaren organischen und anorganischen Verbindungen in Wässern.

(30) Priorität: **07.02.87 DE 3703837**

(43) Veröffentlichungstag der Anmeldung:
**10.08.88 Patentblatt 88/32**

(45) Bekanntmachung des Hinweises auf die Patenterteilung:
**08.01.92 Patentblatt 92/02**

(84) Benannte Vertragsstaaten:
**BE DE IT**

(56) Entgegenhaltungen:
**GB-A- 1 185 975**

**CHEMICAL ABSTRACTS, Band 106, Nr. 6, 16. Februar 1987, Seite 409, Zusammenfassung Nr. 39140c, Columbus, Ohio, US; M.L. KHIDEKEL et al.: "Metal complex catalysts with organic dye ligands which are homogeneous and immobilized on supports", & MEZHDUNAR. SIMP. PO SUYAZI MEZHDU GOMOGEN. I GETEROGEN. KATAL., NOVOSIBIRSK, 15-19 IYULYA, 1986. DOKL. NOVOSIBIRSK 1986, 2(CH 2), 204-26**

(73) Patentinhaber: **BASF Aktiengesellschaft**
**Carl-Bosch-Strasse 38**
**W-6700 Ludwigshafen(DE)**

(72) Erfinder: **Habermann, Wolfgang**
**Gonsenheimer Spiess 8**
**W-6500 Mainz 1(DE)**
Erfinder: **Engelhardt, Hubert**
**Buergermeister-Horlacher-Strasse 84**
**W-6700 Ludwigshafen(DE)**
Erfinder: **Geiger, Wolfgang**
**Hoelderlinstrasse 5**
**W-6831 Plankstadt(DE)**
Erfinder: **Mayer, Udo, Dr.**
**Max-Slevogt-Strasse 27**
**W-6710 Frankenthal(DE)**
Erfinder: **Hammes, Peter, Dr.**
**Haagweg 14**
**W-6701 Ruppertsberg(DE)**
Erfinder: **Simmler, Werner, Dr.**
**Neumannstrasse 13**
**W-6700 Ludwigshafen(DE)**

EP 0 277 632 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

CHEMICAL ABSTRACTS, Band 105, Nr. 2, 1986, Seite 322, Zusammenfassung Nr. 11417d, Columbus, Ohio, US; T.N. EISENBERG et al.: "Dye sensitized photo-oxidation of bromacil in wastewater", & PROC. IND. WASTE CONF. 1985, 40th, 693-702

CHEMICAL ABSTRACTS, Band 75, Nr. 7, 1971, Seite 285, Zusammenfassung Nr. 48103m, Columbus, Ohio, US; J. ROUCHAUD: "Catalytic activation of molecular oxygen", & BULL. SOC. CHIM. Fr. 1971, (4), 1189-91

CHEMICAL ABSTRACTS, Band 71, Nr. 2, 1969, Seite 255, Zusammenfassung Nr. 6360e, Columbus, Ohio, US; F. WOLF et al.: "Oxidation of sulfide ions by atmospheric oxygen in the presence of sulfurous dyes", & WASSERWIRT.-WASSERTECH. 1969, 19(1), 13-15

## Beschreibung

Bei der oxidativen Wasserreinigung setzt man in der Technik aktivierte Kohlen ein, die es ermöglichen, die Schadstoffe und den Sauerstoff in höherer Konzentration auf der Kohlenoberfläche zu binden, so daß der biologische und chemische Abbau beschleunigt wird. Diese Kohlen sorbieren im Vergleich zum Wasser etwa die 800-fache Menge Sauerstoff, wobei ein Teil des Sauerstoffs chemisorptiv gebunden wird und gemäß der Gleichung

$$O_2 + H_2O + 2e = OH^- + O_2H^- \quad \epsilon_h = +300 \text{ mV (ph = 7)}$$

in einem Zweielektronenschritt (Berl-Mechanismus) abreagiert. Die chemische und biologische Oxidation erfolgt bei diesem Verfahren an den polarisierten Kohlenstoffpartikeln oder über das Reaktionsprodukt Wasserstoffperoxid, welches bei der Sauerstoffreduktion anfällt. Technisch hergestellt werden die aktiven Kohlen durch partielle Oxidation von Kohle in Gegenwart von Wasserdampf, Sauerstoff, Alkalisalzen, Alkalihydroxiden und dergleichen bei höheren Temperaturen oder durch Verkohlung von kohlenstoffhaltigen Materialien mit Zinkchlorid, Eisenchlorid, Phosphorsäure oder anderen wasserentziehenden Substanzen oder durch Glühbehandlung von Aktivkohle in inerter Atmosphäre wie z.B. in Stickstoff oder Wasserstoff oder im Vakuum.

Bei allen aufgeführten Verfahren erhält man aktivierte Kohlen, die die Sauerstoffreduktion nur nach dem Berl-Mechanismus ermöglichen.

Auch andere chemische oxidative Vorbehandlungen z.B. mit Salpetersäure, Schwefelsäure, Oleum, Salpetersäure-Schwefelsäure-, Salpetersäure-Wasserstoffperoxid-, Schwefelsäure-Chromsäuregemischen bei Temperaturen > +120 °C und Stickstoffdioxid bei Temperaturen < +300 °C führen zu keinen wesentlichen Verbesserungen der katalytischen Aktivität.

Der Nachteil einer oxidativen Abwasserbehandlung mit diesen aufgeführten Oxidationskatalysatoren ist, daß bei den Potentiallagen des Berl-Mechanismus eine Reihe von organischen Schadstoffen wie z.B. Huminsäuren, Fulvinsäuren, Aromaten oder chlorierte Kohlenwasserstoffe nicht oder nur schwer oxidativ abbaubar sind.

Es ist auch schon ein Verfahren vorgeschlagen worden, das die oxidative Reinigung der Abwässer mit kohlenstoffhaltigen Katalysatoren und Oxidationsmitteln bei höheren Potentiallagen ermöglicht, wenn man einen Kohlenstoffträger verwendet, der in wässrigen Mineralsäuren bei Potentiallagen von $\epsilon_h$ = +1,3 V bis $\epsilon_h$ = 10 V anodisch oxidiert und anschließend mit Molybdän-VI- und/oder Wolfram-VI- und/oder Vanadium-V-Verbindungen dotiert wird.

Bei diesen Katalysatoren kann es in Gegenwart von Mikroorganismen zu einem biologischen Bewuchs und zu Kalkablagerungen auf der Katalysatoroberfläche kommen. Dieser Vorgang führt zu einer Absenkung der Potentiallagen und Verminderung der katalytischen Aktivität.

Aus der G8-A-1 185 975 ist ein Verfahren zum katalytischen Abbau von Mercaptanen in wäßrigen Lösungen an Metallphthalocyaninen bekannt, wobei die Metallphthalocyanine beispielsweise auf Aktivkohleträger aufgebracht sein können.

Aufgabe der vorliegenden Erfindung ist es, den Abbau der oxidierbaren organischen und/oder anorganischen Wasserinhaltsstoffe bei hohen Potentiallagen durchzuführen und dabei einen biologischen Bewuchs sowie die Belegung der Katalysatoroberfläche mit Fremdmetallkationen wie z.B. Calzium zu vermeiden,

Es wurde nun gefunden, daß man diese Nachteile vermeidet und den katalytischen Abbau von oxidierbaren organischen und/oder anorganischen Verbindungen in Wässern mit kohlenstoffhaltigen Katalysatoren und Oxidationsmitteln bei höheren Potentialen ohne biologischen Bewuchs und Kalkablagerungen durchgeführen kann, wenn man einen inerten Träger verwendet, der mit durch Heteropolysäuren und/oder Polysäuren und/oder Metallsalzen oder Hetallsäuren der V. bis VIII. Nebengruppe verlackten kationischen Farbstoffen beschichtet ist.

Als Träger verwendet man inerte Stoffe, die Sauerstoff speichern können, zweckmäßig Kohlenstoffträger z.B. Stein - bzw. Braunkohlen - Koks, gasarme Kohlen, Aktivkohlevorprodukte, Aktivkohlen und Anthrazit. Weiterhin können Zeolithe und Träger auf Basis von Kieselsäure eingesetzt werden. Bevorzugt verwendet man verschiedene Aktivkohlen, Koks und Graphit.

Die Träger können mit Molybdän-VI- und/oder Wolfram-VI- und/oder Vanadium-V-Verbindungen dotiert sein. Zur Dotierung können z.B. die Kohlenstoffträger mit wässrigen Ammoniummolybdat- und/oder -Wolframat-und/oder -Vanadatlösungen imprägniert werden, die man dann anschließend durch eine thermische oder chemische Behandlung in die entsprechenden Metalloxide oder Sulfide überführt.

Als kationische Farbstoffe können verwendet werden (C.I. = Colour Index)

Triarylamin-Farbstoffe wie z.B.

| | | |
|---|---|---|
| Basic green | 4 | C.I. 42 000 |
| | 1 | 42 040 |
| blue | 1 | 42 025 |
| | 5 | 42 140 |
| violet | 14 | 42 510 |
| violet | 2 | 42 520 |
| red | 5 | 42 500 |
| Solvent blue | 23 | 42 760 |
| Basic violet | 3 | 42 555 |
| Basic violet | 4 | 42 600 |
| blue | 26 | 44 045 |
| blue | 7 | 42 595 |
| blue | 8 | 42 563 |
| blue | 158 | |
| violet | 50 | |

Xanthen-Farbstoffe wie z.B.

| | | |
|---|---|---|
| Basic violet | 10 | 45 170 |
| Basic violet | 11 | 45 175 |
| Basic violet | 1 | 45 160 |

Oxazin Farbstoffe wie z.B.

| | | |
|---|---|---|
| Basic blue | 4 | 51 004 |
| Basic blue | 6 | 51 175 |

Thiazin und Phenazin wie z.B.

| | | |
|---|---|---|
| Basic blue | 9 | 52 015 |
| Basic blue | 24 | 52 030 |
| Basic red | 5 | 50 040 |

Methin-Farbstoffe wie z.B.

| | | |
|---|---|---|
| Basic violet | 16 | 48 013 |
| Basic red | 12 | 48 065 |

Azofarbstoffe wie z.B.

| | | |
|---|---|---|
| Basic yellow | 28 | 48 054 |
| Basic red | 46 | |
| Basic blue | 41 | 11 105 |
| Basic red | 18 | 11 085 |

Metallkomplexfarbstoffe wie z.B. amidierte, aminomethylierte und quarternäre Ammoniumgruppen tragende Eisen- und/oder Mangan-phthalocyanine

Vorzugsweise setzt man als kationische Farbstoffe Triarylmethanfarbstoffe wie. Z.B. Basic green 4 C.I. 42 000, Basic violet 14 C.I. 42 510, Basic red 5 C.I. 42 500, Basic violet 3 C.I. 42 555, blue 158, violet 50, Solvent blue 23 C.I. 42 760, Xanthenfarbstoffe wie z.B. Basic violet 10 C.I. 45 170, Basic violet 11 C.I. 45 175, Basic violet 1 C.I. 45 160 und Azinfarbstoffe wie z.B. Basic blue 9 C.I. 57 030 ein. Als Heteropolysäuren verwendet man Säuren, die aus Metallsäuren der V. bis VIII. Nebengruppe und Nichtmetallsäuren der IV. bis VII. Hauptgruppe des periodischen Systems der Elemente bestehen. Vorzugsweise sind Heteropolysäuren geeignet, die aus Metallsäuren des Molybdäns und/oder Wolframs und/oder Vanadiums und Nichtmetallsäuren des Phosphors und Siliziums bestehen. Geeignete Polysäuren sind Säuren des Vanadiums und/oder Molybdäns und/oder Wolframs.

Die Beschichtung der kohlenstoffhaltigen Trägermaterialien mit den durch Heteropolysäuren oder Polysäuren verlackten kationischen Farbstoffen kann durch Imprägnierung mit den Farbstofflösungen und anschließende Verlackung mit Heteropolysäurelösungen erfolgen. Als Lösungsmittel für die kationischen Farbstoffe sind z.B. Wasser, wässrige Essigsäure und Alkanole geeignet. Vorzugsweise verwendet man Waser als Lösungsmittel. Die Konzentration des kationischen Farbstoffs in der Lösung kann 0,001 bis 10

Gew.% betragen.

Bevorzugt kommen 0,01 bis 0,1 Gew.%ige Lösungen in Betracht. Bezogen auf den kationischen Farbstoff werden 0,01 bis 10 g, vorzugs- 0,05 bis 2 g je Liter kohlenstoffhaltigen Katalysatorträger aufgebracht. Als Lösungsmittel für die Heteropolysäuren und/oder Polysäuren können Wasser oder sauerstoffhaltige organische Lösungsmittel wie z.B. Ethylacetat, Ethylether, Propylether verwendet werden. Vorzugsweise setzt man Wasser ein. Die Konzentration der Heteropolysäuren oder Polysäuren kann 0,001 bis 10 Gew.%, vorzugsweise 0,02 bis 0,2 Gew.% bezogen auf die Lösung betragen.

An Stelle der Heteropolysäuren und/oder Polysäuren können weiterhin zur Verlackung auch die Salze und Säuren der V. bis VIII. Nebengruppe eingesetzt werden. Vorzugsweise verwendet man Ammoniumheteropoly- oder Ammoniumpolyverbindungen des Molybdäns und/oder Wolframs und/oder Vanadiums und/oder Kaliumpolytantalate, Acidotantalate, Acidoniobate und/oder Peroxisäuren des Niobs oder Tantals und/oder Alkalimanganate oder Permanganate.

Die Beschichtung mit den durch Poly- oder Heteropolysäuren verlackten, kationischen Farbstoffen kann auch in der Weise erfolgen, daß man feinteilige in einem wässrigen oder organischen Lösungsmittel suspendierte, verlackte Farbstoffpigmente auf der Oberfläche des inerten Trägers sorbiert.

Bei der technischen Ausführung setzt man vorzugsweise die mit den verlackten, kationischen Farbstoffen beschichteten Träger als Granulate in Schüttbettreaktoren als Filterschüttungen ein, die von oben mit dem schadstoffhaltigen sund mit Sauerstoff oder anderen Oxidantien gesättigten Wasser durchströmt werden. Diese Filterschüttungen können so betrieben werden, daß die Hohlräume zwischen den Granulaten mit Flüssigkeit geflutet sind (Naßfahrweise) oder noch Gas z.B. Luft, Sauerstoff enthalten wie z.B. in Rieselkörpern (Trockenfahrweise). Zur Erhöhung der Sauerstoffkonzentration im Wasser kann unter Druck gearbeitet werden. Die Körnung des Materials soll einheitlich sein. Bevorzugt sind Korngrößen von 2 bis 6 mm.

Bei Verschmutzung kann man die Filterschüttungen durch Rückspülung mit Wasser und Luft von der groben Verunreinigung befreien.

An Stelle der von oben nach unten durchströmten Filterschüttungen können Schüttungen eingesetzt werden, die von unten nach oben durchströmt werden. Je nach Strömungsgeschwindigkeit können solche Schüttungen als expandiertes Bett oder Wirbelbett betrieben werden, wobei zusätzlich Luft oder Sauerstoff eingegast werden kann. Hier können feinteiligere Granulate z.B. von 0,5 bis 2 mm zum Einsatz kommen. Es ist auch möglich, Tauchkörper oder Schwebekörper mit dem Katalyator zu beschichten.

Eine Regeneration von oberflächlich verschmutzten und teilweise inaktivierten Katalysatorschüttungen kann durch eine Behandlung mit schadstoffarmen oxidationsmittelhaltigen Wasser erfolgen. Eine technisch günstige Verfahrensweise ist der Betrieb mit oxidationsmittelhaltigem Abwasser im Kreislauf, ohne daß neues Abwasser zugeführt wird. Als Oxidationsmittel kann man Luft, Sauerstoff oder Wasserstoffperoxid verwenden. Die Regenration kann je nach Verschmutzungsgrad in 1 bis 10 Stunden oder bei sehr starken Verschmutzungen in einigen Tagen erfolgen.

Eine andere Ausführungsform besteht darin, den mit verlackten, kationischen Farbstoffen beschichteten Katalysator als Pulver in das Abwasser einzutragen. Bei dieser Verfahrenstechnik ist es wichtig, daß für einen guten Stoffaustausch z.B. durch Rühren gesorgt wird. Die Zufuhr an Oxidationsmittel muß so gesteuert werden, daß das Potential der Katalysatorpartikel einen Wert von $\epsilon_h \geqq +600$ mV gegenüber dem Potential der Wasserstoffelektrode im Abwasser aufweist.

Das Verfahren kann unter einem Druck von 1 bis 300 bar und bei Temperaturen zwischen 0 und 400 °C ausgeführt werden, vorzugsweise bei Drucken über 10 bar und Temperaturen über 120 °C für schwer abbaubare Abwässer z.B. Deponieabwässer.

Die beschichteten Kohlenstoffträger kann man in Form von porösen Rohren und Platten ausführen, die einseitig aktviert und dotiert sind, wobei das Abwasser auf der aktiven Seite vorbeiströmt, während von der anderen Seite, welche hydrophobiert sein kann, Luft oder Sauerstoff durch den Kohlenstoffträger geleitet wird.

Weiterhin ist es möglich, Graphit- Aktivkohle oder Kohlefilze und Gewebe oberflächlich zu aktivieren und dotieren, die mit dem schadstoff- und oxidationsmittelhaltigen Abwasser durchströmt werden.

Bei der Entfernung von Pestiziden und aromatischen Chlorkohlenwasserstoffen aus schadstoffarmen, sauerstoffhaltigen Grund- und Oberflächenwässern ist es zweckmäßig, Aktivkohlefilterschüttungen mit einer Korngröße von ≦ 0,5 mm oder beschichtete Aktivkohlefilze bzw. Aktivkohlegewebe einzusetzen.

Bei dem Einsatz anderer Oxidationsmittel als Sauerstoff oder Wasserstoffperoxid wie z.B. Eisen-III-nitrat, Eisen-III-chlorid, Eisen-III-sulfat, Eisen-III-nitrat- oder Eisen-III-sulfat-Wasserstoffperoxidgemischen und dergleichen ist es zweckmäßig, durchströmte Filterschüttungen oder feinteilige Pulver einzusetzen.

Die durch Hetero- oder Polysäuren auf feinteiligen Kohlenstoffträgern fixierten kationischen Farbstoffe Können auch in Kühlkreisläufen mit Oberflächenwässern zur Verhinderung von biologischem Bewuchs

verwendet werden. Vorzugsweise setzt man komplexierte Phenothiazinfarbstoffe, wie z.B. Methylenblau ein.

In der Brauchwasseraufbereitung können Filterschüttungen aus Aktivkohlen, die mit durch Heteropolysäuren oder Polysäuren komplexierten Triphenylmethan- und/oder Phenothiazinfarbstoffen beschichtet sind, zur Reinigung und Entkeimung z.B. in Schwimmbädern verwendet werden.

Weiterhin kann man Ionenaustauscher, z. B. bei der Wasserenthärtung durch Zusätze von komplexierten Phenothiazinfarbstoffen auf kohlenstoffhaltigen Trägern vor biologischem Bewuchs und Abbau schützen.

Beispiel 1

Ein Aktivkohlegranulat mit den Abmessungen von 5 mm Länge und 3 mm Durchmesser wird mit einer 0,006 Gew.%-igen wässrigen Lösung von Basic violet 50 etwa 15 Minuten imprägniert. Je Liter Aktivkohlegranulat wurden 0,12 g Farbstoff verwendet. Anschließend wird die mit dem Farbstoff beladene Kohle etwa 15 Minuten mit einer wässrigen 0,02 Gew.%-igen Phosphormolybdänsäurelösung behandelt, so daß pro Liter Aktivkohle max. 0,4 g Phophormolybdänsäure gebunden werden.

Setzt man das beschichtete Kohlegranulat in einer Filterschüttung einer Laborversuchseinrichtung ein, die mit sauerstoffgesättigtem Kläranlagenauslaufwasser betrieben wird, so ergeben sich bei einer Verweilzeit

$$T = \frac{\text{Schüttvolumen}}{\text{Abwasservolumenstrom}}$$

von 30 Minuten folgende mittlere Werte für den TOC- und COD-Abbau:

(TOC = total organic carbon; COD = chemical oxygen demand)

| TOC-Gehalt im Zulauf mg/l | TOC-Gehalt im Ablauf mg/l | COD-Gehalt im Zulauf mg/l | COD-Gehalt im Ablauf mg/l |
|---|---|---|---|
| 65 | 10 | 165 | 45 |

Biologischer Bewuchs und eine Verkalkung der Kohlenträger werden nach einer Versuchsdauer von 6 Monaten nicht beobachtet. Verunreinigungen durch grobe Partikel werden durch eine Rückspülung (etwa 5 Minuten) mit dem gleichen Kläranlagenauslaufwasser alle 10 bis 30 Tage entfernt.

Beispiel 2

Ein Aktivkohlegranulat mit einer Korngröße von 0,2 bis 0,5 mm wird mit einer wässrigen 0,05 % Lösung des Farbstoffes

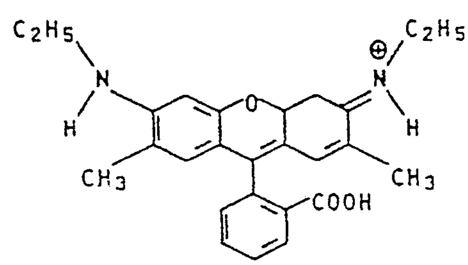

15 Minuten imprägniert. Je Liter Aktivkohlegranulat werden ~ 1 g Farbstoff verwendet. Die mit dem Farbstoff beladene Kohle wird anschließend

15 Minuten mit einer 0,02 gew.%igen wässrigen Phosphormolybdänsäurelösung behandelt.

Setzt man das beschichtete Kohlegranulat in einer Filterschüttung ein, die mit sauerstoffhaltigem durch Pestizide verunreinigtem Wasser betrieben wird, dann ergeben sich folgende Abbauwerte:

| Pestizidgehalt im Zulauf | Pestizidgehalt im Auslauf |
|---|---|
| (Bentazon ®) ppb<br>55 | (Bentazon ®) ppb<br>≦ 1 |

Beispiel 3

Ein Aktivkohlepulver mit einer Korngröße von 50 bis 100 µm Korngröße wird 20 Minuten mit einer 0,012 gew.%igen wässrigen Lösung von Basic blue 158 behandelt, so daß pro Liter Aktivkohle etwa 0,26 g Farbstoff gebunden werden. Anschließend wird die mit dem Farbstoff imprägnierte Kohle etwa 15 Minuten mit einer wässrigen 0,2 gew.%igen Phosphormolybdänsäure behandelt. Das so beschichtete Material eignet sich als Katalysator bei der Thermocrakung von Deponie-Sickerwasser mit Sauerstoff bei höheren Temperaturen und Drucken. Als Katalysatormenge kommt etwa 100 g beschichtetes Kohlegranulat pro $m^3$ Deponie-Sickerwasser in Betracht.

Beispiel 4

Zehn Graphitrohre mit den Abmessungen von 500 mm Länge, 60 mm Außendurchmesser, 40 mm Innendurchmesser und einer offenen Porosität von 16 % werden mit einer 0,05 gew.%igen wässrigen Lösung des Farbstoffs wie in Beispiel 2 imprägniert. Anschließend taucht man die Rohre etwa 15 Minuten in eine 0,2 Gew.%ige wässrige Phosphorvanadinsäurelösung. Nach dieser Behandlung werden die Rohre senkrecht in ein Zylindergefäß so eingebaut, daß der Abstand der Rohrachsen etwa 100 mm beträgt. Durch die Innenbohrung der Rohre wird Luft gedrückt, während die Außenflächen vom Abwasser umspült werden. Der Luftdruck im Innern der Rohre wird so gewählt, daß die Luft gerade durch die Rohrwandungen austritt. Diese Anordnung eignet sich vorzugsweise zur Reinigung stark verschmutzter Abwässer, z.B. von Deponieabwässern.

Beispiel 5

Ein Graphitgranulat mit den Abmessungen von 3 mm Länge und 2 mm Durchmesser wird in 50 gew.%iger, wässriger Salpetersäure 8 Minuten bei einer Stromdichte von 6 $kA/m^2$ (bezogen auf die geometrische Oberfläche) und einem Potential $\epsilon_h$ = 2,2 V anodisch oxidiert. Anschließend wäscht man gut mit Wasser und imprägniert das Granulat mit einer 0,05 gew.%igen, wässrigen Lösung von Basic green 4 (C.I. 42 000). Nach dieser Behandlung wird das mit dem Farbstoff imprägnierte Granulat etwa 15 Minuten in eine 0,2 Gew.%ige, wässrige Wolframatophosphorsäure eingetaucht. Der Katalysator eignet sich zur Oxidation von Pestiziden in sauren Abwässern mit Sauerstoff oder Wasserstoffperoxid.

Beispiel 6

Ein Aktivkohlegranulat mit den Abmessungen von 5 mm Länge und 3 mm Durchmesser wird mit einer 2 gew.%igen, wässrigen Ammoniummolybdatlösung imprägniert. Danach trocknet man 3 h bei +80 °C und tempert dann 1 h bei +120 °C unter Stickstoff. Das so vorbehandelte Granulat wird mit einer 0,8 gew.%igen, wässrigen Lösung von Basic blue 9 (C.I. 52 015) imprägniert. Nach dieser Behandlung taucht man das imprägnierte Granulat in eine 0,2 Gew.%ige, wässrige Phophormolybdänsäurelösung. Der Katalysator eignet sich zur Oxidation von Schadstoffen in Abwässern, die eine hohe Keimzahl aufweisen.

Beispiel 7

Ein Graphitgranulat wird wie Beispiel 5 anodisch oxidiert und anschließend mit einer 0,5 gew.%igen, wässrigen Lösung von Basic violet 5 imprägniert. Nach dieser Behandlung taucht man das Granulat etwa 15 Minuten in eine 0,3 GEw.%ige, wässrige Phosphorvanadinsäurelösung. Dieser Katalysator eignet sich zur Oxidation von Chlorkohlenwasserstoffen wie z.B. Chloraceton, o-Chlorpyridin, Chloressigsäure, Chloral und Chloracetal in Gegenwart von Eisen-III-ionen und Wasserstoffperoxid.

Beispiel 8

Einer 2 gew.%igen, wässrigen Lösung von Basic blue 9 (C.I. 52 015) werden 0,2 Gew.% eines

feinkörnigen Aktivkohlepulvers mit einer Korngröße von 5µm zugesetzt. Diese Suspension wird oberflächlich auf die Rohre eines Kühlers aufgetragen, der mit Oberflächenwasser gekühlt wird. Nach dieser Prozedur wird die aufgetragene Suspension durch eine Behandlung mit 0,8 gew.%iger, wässriger Silicomolybdänsäure fixiert. Dieser Oberflächenbelag baut beim Betrieb des Kühlers mit Oberflächenwasser oxidierbare Verbindungen im Kühlwasser ab und verhindert den Bewuchs mit Bakterien und Algen.

Beispiel 9

Ein Aktivkohlegranulat beschichtet wie in Beispiel 1 wird in einer Filterschüttung mit belüfteten Deponiesickerwasser so lange betrieben bis die Abbauleistung für den TOC bei einer Verweilzeit von 3 h weniger als 30 % beträgt. Danach stellt man den Deponiesickerwasserzulauf ab und betreibt die Filterschüttung mit dem sauerstoffhaltigen Abwasser im Kreislauf bis 90 % des TOC-Gehaltes abgebaut sind. Nach dieser Verfahrensweise wir die Schüttung wieder mit Sickerwasserzulauf bis zum Absinken des TOC-Abbaus auf Werte ≦ 30 % belastet, erneut regeneriert und in diesen Zyklen weiterbetrieben.

## Patentansprüche

1. Verfahren zum katalytischen Abbau von oxidierbaren organischen und/oder anorganischen Verbindungen in Wässern mit einem auf einem Träger aufgebrachten Katalysator und Oxidationsmitteln, dadurch gekennzeichnet, daß man einen inerten Träger verwendet, der mit durch Heteropolysäuren und/oder Polysäuren und/oder Metallsalzen oder Metallsäuren der V. bis VIII. Nebengruppe verlackten kationischen Farbstoffen beschichtet ist.

2. Verfahren nach Anspruch 1, dadurch gekennzeichnet, daß man als inerten Träger einen kohlenstoffhaltigen Träger verwendet.

3. Verfahren nach Anspruch 1 und 2, dadurch gekennzeichnet, daß man als kationische Farbstoffe Diarylmethan- und Triarylmethan-, Xanthen-, Acridin-, Phenazin-, Oxazin-, Thiazin-, Methin- und Azofarbstoffe mit externer Ammoniumgruppe oder ladungstragenden Stickstoffatomen des chromophoren Systems sowie Metallkomplexfarbstoffe verwendet.

4. Verfahren nach Anspruch 1 bis 3, dadurch gekennzeichnet, daß man Heteropolysäuren verwendet, die aus Metallsäuren des Molybdäns und/oder Wolframs und/oder Vanadiums und Nichtmetallsäuren des Phosphors und/oder Siliziums bestehen.

5. Verfahren nach Anspruch 1 bis 4, dadurch gekennzeichnet, daß man Polysäuren des Vanadiums und/oder Molybdäns und/oder Wolframs verwendet.

6. Verfahren nach Anspruch 1 bis 5, dadurch gekennzeichnet, daß die Beschichtung der kohlenstoffhaltigen Katalysatoren durch Imprägnierung mit in einem Lösungsmittel gelösten kationischen Farbstoffen und anschließende Verlackung mit den wässrigen Heteropolysäuren oder Polysäuren erfolgt.

7. Verfahren nach Anspruch 1 bis 6, dadurch gekennzeichnet, daß der mit den verlackten, kationischen Farbstoffen beschichtete kohlenstoffhaltige Katalysator als Pulver in das oxidierbare Verbindungen enthaltende Wasser eingetragen wird, wobei die Stoffaustauschbedingungen, die Temperatur und die Zufuhr an Oxidationsmittel so gesteuert werden, daß das Katalysatormaterial ein Potential von $\epsilon_h >$ +600 mV gegenüber dem Potential der Wasserstoffelektrode in dem Abwasser aufweist.

8. Verfahren nach Anspruch 1 bis 7, dadurch gekennzeichnet, daß die oxidierbaren organischen und/oder anorganischen Wasserinhaltsstoffe in Gegenwart des mit den verlackten, kationischen Farbstoffen beschichteten, kohlenstoffhaltigen Katalysators und Oxidationsmitteln bei Temperaturen zwischen 0 und +400 °C oxidiert werden.

9. Verfahren nach Anspruch 1 bis 6, dadurch gekennzeichnet, daß der mit den verlackten, kationischen Farbstoffen beschichtete, kohlenstoffhaltige Katalysator als Granulat in einem statischen Schüttbett-Rohrreaktor eingesetzt wird durch den das oxidierbare Verbindungen enthaltende und oxidationsmittelhaltige Wasser strömt.

10. Verfahren nach Anspruch 9, dadurch gekennzeichnet, daß der mit den verlackten, kationischen Farbstoffen beschichtete, kohlenstoffhaltige Katalysator als Granulat mit einer Korngröße von 2 bis 6 mm eingesetzt wird.

## Claims

1. A process for the catalytic degradation of oxidizable organic and/or inorganic compounds in waters with a catalyst applied to a carrier, and an oxidizing agent, wherein the carrier used is an inert carrier which is coated with a cationic dye laked with heteropolyacids and/or polyacids and/or metal salts or metal acids of subgroups V to VIII.

2. A process as claimed in claim 1, wherein the inert carrier used is a carbon-containing carrier.

3. A process as claimed in claims 1 and 2, wherein the cationic dye used is a diarylmethane, triarylmethane, xanthene, acridine, phenazine, oxazine, thiazine, methine or azo dye having an external ammonium group or chargecarrying nitrogen atoms of the chromophore system, or a metal complex dye.

4. A process as claimed in claims 1 to 3, wherein a heteropolyacid which consists of metal acids of molybdenum and/or tungsten and/or vanadium and nonmetal acids of phosphorous and/or silicon is used.

5. A process as claimed in claims 1 to 4, wherein a polyacid of vanadium and/or molybdenum and/or tungsten is used.

6. A process as claimed in claims 1 to 5, wherein coating of the carbon-containing catalyst is effected by impregnation with a cationic dye dissolved in a solvent, followed by laking with the aqueous heteropolyacid or polyacid.

7. A process as claimed in claims 1 to 6, wherein the carbon-containing catalyst coated with the laked, cationic dye is introduced in the form of a powder into the water containing oxidizable compounds, the mass transfer conditions, the temperature and the feed of oxidizing agent being controlled so that the catalyst has a potential $_h$ + 600 mV relative to the potential of the hydrogen electrode in the wastewater.

8. A process as claimed in claims 1 to 7, wherein the oxidizable organic and/or inorganic water ingredients are oxidized at from 0 to $+400^\circ$C in the presence of the carbon-containing catalyst coated with the laked, cationic dye and of the oxidizing agent.

9. A process as claimed in claims 1 to 6, wherein the carbon-containing catalyst coated with the laked, cationic dye is used in the form of granules in a static fixed-bed tube reactor through which the water containing oxidizable compounds and oxidizing agent flows.

10. A process as claimed in claim 9, wherein the carbon-containing catalyst coated with the laked, cationic dye is used in the form of granules having a particle size of from 2 to 6 mm.

## Revendications

1. Procédé de dégradation ou décomposition catalytique de composés organiques et/ou inorganiques, oxydables, dans des eaux, à l'aide d'un catalyseur appliqué sur un support et d'agents d'oxydation, caractérisé en ce que l'on utilise un support inerte qui est revêtu de colorants cationiques revêtus d'hétéropolyacides et/ou de polyacides et/ou de sels de métaux ou d'acides de métaux des cinquième à huitième sous-groupes.

2. Procédé suivant la revendication 1, caractérisé en ce que l'on utilise un support contenant du carbone à titre de support inerte.

3. Procédé suivant les revendications 1 et 2, caractérisé en ce qu'à titre de colorants cationiques, on

utilise des colorants diarylméthaniques et triarylméthaniques, xanthéniques, acridiniques, phénaziniques, oxaziniques, thiaziniques, méthiniques et azoïques, avec un radical ammonium externe ou des atomes d'azote porteurs de charges du système chromophorène, comme aussi des colorants à base de complexes de métaux.

**4.** Procédé suivant les revendications 1 à 3, caractérisé en ce que l'on utilise des hétéropolyacides qui se composent d'acides de métaux du molybdène et/ou du tungstène et/ou du vanadium et des acides de métaloïdes du phosphore et/ou du silicium.

**5.** Procédé suivant les revendications 1 à 4, caractérisé en ce que l'on utilise des polyacides du vanadium et/ou du molybdène et/ou du tungstène.

**6.** Procédé suivant les revendications 1 à 5, caractérisé en ce que l'on procède à la garniture des catalyseurs contenant du carbone par imprégnation à l'aide de colorants cationiques dissous dans un solvant et application ou revêtement subséquent à l'aide des polyacides ou hétéropolyacides aqueux.

**7.** Procédé suivant les revendications 1 à 6, caractérisé en ce que l'on introduit le catalyseur contenant du carbone garni de colorants cationiques, revêtus, sous la forme de poudre dans l'eau contenant les composés oxydables, où on règle les conditions d'échange ou de transfert de matière, la température et l'alimentation en agent d'oxydation d'une manière telle que la matière catalytique présente un potentiel de $\epsilon_h >$ +600 mV visà-vis du potentiel de l'électrode d'hydrogène dans l'eau résiduaire.

**8.** Procédé suivant les revendications 1 à 7, caractérisé en ce que l'on oxyde les substances organiques et/ou inorganiques, oxydables, présentes dans l'eau, en présence des agents d'oxydation et du catalyseur contenant du carbone gerni de colorants cationiques revêtus, à des températures qui varient de 0 à +400°C.

**9.** Procédé suivant les revendications 1 à 6, caractérisé en ce que l'on met le catalyseur contenant du carbone, garni de colorants cationiques, revêtus, sous la forme d'un granulé, dans un réacteur tubulaire à lit lâche, statique, à travers lequel s'écoule l'eau qui contient les agents d'oxydation et les composés oxydables.

**10.** Procédé suivant la revendication 9, caractérisé en ce que l'on utilise le catalyseur contenant du carbone, garni de colorants cationiques, revêtus, sous la forme d'un granulé dont le calibre des grains fluctue de 2 à 6 mm.